Europäisches Patentamt

European Patent Office

Office européen des brevets

(19)

(11) Numéro de publication : **0 028 433**
**B1**

(12) FASCICULE DE BREVET EUROPÉEN

(45) Date de publication du fascicule du brevet :
28.08.85

(51) Int. Cl.⁴ : **G 04 C   3/16, H 02 P   5/16**

(21) Numéro de dépôt : **80201020.7**

(22) Date de dépôt : **28.10.80**

(54) Dispositif d'entraînement pour appareil nécessitant un entraînement intermittent.

(30) Priorité : **31.10.79 FR 7927047**

(43) Date de publication de la demande :
**13.05.81 Bulletin 81/19**

(45) Mention de la délivrance du brevet :
**28.08.85 Bulletin 85/35**

(84) Etats contractants désignés :
**CH DE GB IT LI**

(56) Documents cités :
**CH-A-   451 829**
**FR-A- 1 332 784**
**US-A- 3 881 144**
**US-A- 3 971 204**

(73) Titulaire : **Société industrielle de Sonceboz S.A.**

**CH-2605 Sonceboz (Berne) (CH)**

(72) Inventeur : **Pfister, Jean-François**
**10, rue du Soleil**
**CH-2605 Sonceboz (Berne) (CH)**

(74) Mandataire : **Dubois, Jean René et al**
**Bovard AG Patentanwälte VSP Optingenstrasse 16**
**CH-3000 Bern 25 (CH)**

## Description

La présente invention concerne un dispositif d'entraînement pour appareil nécessitant, durant une longue période exempte d'entretien, un entraînement intermittent sûr avec un certain couple mécanique.

De tels dispositifs d'entraînement sont utilisés notamment pour les appareils enregistreurs de divers paramètres, par exemple technologiques (contraintes mécaniques dans les ponts et ouvrages d'art), économiques (débit des pipe-lines, gazoducs, etc.), météorologiques (pollution de l'air et de l'eau, radiations, ensoleillement, etc.). Des dispositifs d'entraînement intermittents trouvent encore des quantités d'autres utilisations dans des domaines les plus divers.

Un des impératifs concernant ces dispositifs d'entraînement est l'impératif d'autonomie à très longue échéance. En effet, ces appareils sont souvent disposés, en nombre important, en des endroits difficilement accessibles, leur lecture n'étant effectuée qu'assez rarement ou alors étant transmise par radio à des postes centraux. De toute façon, ces appareils doivent être aptes à fonctionner très longtemps (au moins plusieurs années, voire une dizaine d'années), sans qu'il soit nécessaire de leur faire subir des opérations d'entretien. Ces appareils sont fort souvent éloignés des endroits où l'énergie électrique du réseau est disponible et alors ils sont alimentés par des piles, groupes de piles ou accumulateurs, à grande capacité et à très haute fiabilité.

On remarque, par ailleurs, que, pour fonctionner, ces appareils demandent du dispositif d'entraînement intermittent qui les actionne la fourniture d'un certain couple mécanique, nettement supérieur à celui qui suffit par exemple à entraîner de simples aiguilles indicatrices.

Pour obtenir ladite fiabilité à long terme, on doit résoudre, outre le problème de munir ces appareils de sources d'énergie suffisantes, très fiables, et à très longue durée de vie — problème que la technologie actuelle est à même de résoudre — deux problèmes particuliers, l'un relatif à la consommation d'énergie, qui doit être très faible, ce qui nécessite un excellent rendement, et l'autre relatif à la quasi-absence d'usure des différents organes mobiles compris dans le dispositif. Ces deux problèmes sont tous deux essentiellement en relation avec le genre de moteur que comprend le dispositif d'entraînement intermittent.

On connaît un type de moteur électrique, apte à rendre le service désiré, qui se particularise par une usure extrêmement faible, lui permettant de fonctionner, par intermittence durant plusieurs années (jusqu'à dix ans) sans aucun service d'entretien. Il s'agit du moteur pas à pas. L'utilisation d'un moteur pas à pas dans un dispositif d'entraînement du type susmentionné fournit donc une bonne solution au second problème précité, rencontré dans la voie de la satisfaction de l'impératif en question. Malheureusement, le moteur pas à pas n'est pas à même de fournir une solution adéquate au premier problème susmentionné, celui d'une grande économie d'énergie, c'est-à-dire d'un bon rendement. Dans un moteur pas à pas en effet, les conditions d'impulsions électriques sont fixes et elles doivent être telles qu'une énergie suffisante soit fournie à chaque pas au moteur, compte tenu des conditions de couple résistant les plus sévères qui peuvent être rencontrées. Même lorsque ce couple résistant effectif est beaucoup plus faible, chaque pas du moteur utilise la même quantité d'énergie, déterminée pour assurer l'avance certaine du moteur même en condition défavorable. En conséquence, il s'avère que, si l'on compare la puissance mécanique fournie (compte tenu du couple mécanique nécessaire précédemment mentionné) avec la dépense d'énergie électrique effective, on arrive à des résultats qui sont loin d'être excellents. L'utilisation d'un moteur pas à pas oblige donc à surdimensionner notablement la capacité de la source d'énergie ce qui ne va pas sans inconvénient majeur du point de vue du coût et de l'encombrement.

L'utilisation d'un autre type de moteur, connu pour un rendement particulièrement élevé, pourrait être envisagée, ce moteur-là étant le moteur électrique à courant continu. En effet, ce dernier présente un très bon rendement et a l'avantage d'adapter automatiquement sa consommation d'énergie électrique du couple qui est requis sur son arbre de sortie. L'utilisation d'un moteur à courant continu semble donc résoudre le premier problème précédemment mentionné, mais elle se heurte à des difficultés concernant la solution du deuxième problème en question, celui de l'usure qui doit être très faible. Lorsqu'un petit moteur à courant continu fonctionne d'une façon permanente, on peut attendre de lui qu'il marche d'une façon fiable durant approximativement 2 000 heures, voire 3 000 heures pour les moteurs de très bonne qualité. Au-delà, le fonctionnement fiable du moteur ne peut être assuré que moyennant un service d'entretien, au cours duquel notamment le collecteur et les balais seront, soit entièrement nettoyés, soit changés. Malgré tout, des considérations théoriques mènent à penser qu'un moteur du type à courant continu pourrait être utilisé durant plusieurs années sans entretien, pour un fonctionnement en service intermittent. Si l'on admet, par exemple que le moteur va fonctionner au total durant deux secondes chaque minute (par exemple environ 30 ms chaque seconde) on a un rapport « temps de marche/temps total écoulé » de 30, ce qui fait qu'on pourrait penser porter ainsi de 4 à 120 le nombre de mois durant lequel un tel moteur peut fonctionner sans entretien (120 mois, c'est-à-dire 10 ans, correspondant à une durée de marche autonome sans entretien qui serait tout à fait satisfaisante).

Les essais pratiques ont toutefois montré que cette théorie était inapplicable ; des moteurs à courant continu fonctionnant de façon intermittente, par exemple de la façon susmentionnée, s'avèrent sujets à une usure inadmissible, ramenant la fiabilité bien en deçà de ce qui est requis, approximativement après une période de 10 à 18 mois. Ainsi donc, en pratique, le coefficient de « multiplication de la durée de vie sans entretien du fait de la marche intermittente » espéré par exemple à 30, ne vaut que 3 ou 4.

On a cherché les raisons de ces résultats désavantageux et l'on en est arrivé à constater que, si l'usure, en service intermittent, n'est pas diminuée dans le même rapport que la durée de marche effective relativement à l'usure en cas de marche permanente, cela est dû au fait que l'usure, notamment du collecteur et des balais, se trouve multipliée dans une forte mesure lors des phénomènes intervenant à l'enclenchement et au déclenchement de l'alimentation du moteur, c'est-à-dire au démarrage et au stoppage du moteur.

On sait qu'au démarrage et à l'arrêt d'un moteur à courant continu, des valeurs de courant (au démarrage) et de tension inverse (au stoppage) très fortement supérieure aux valeurs que l'on a en régime de marche normal interviennent et exercent une action particulièrement néfaste à l'endroit du système commutateur (collecteur et balais). Théoriquement, ces valeurs particulièrement élevées, ne devraient toutefois intervenir que durant un temps extrêmement court, ce qui fait que le surcroît d'usure qui leur est dû ne devrait guère dépasser la marge de 10 %.

Lors des premiers essais effectués, de même que dans les rares dispositifs d'entraînement intermittents à l'aide d'un moteur à courant continu qui sont actuellement existants ou qui ont été jusqu'ici proposés, les commutations « en/hors » de l'alimentation du moteur à courant continu étaient effectuées, au moins en bonne partie, par des organes commutateurs électro-mécaniques. On peut citer, notamment, le dispositif prévu à l'unique figure de l'exposé DE-AS-2 345 103, dispositif dans lequel un moteur à courant continu est utilisé pour fournir un entraînement intermittent et a son courant principal d'alimentation enclenché par des moyens électroniques, mais déclenché par des moyens électro-mécaniques.

Or, il s'avère que tous les organes de commutation électro-mécaniques, si bien construits soient-ils, présentent et à l'enclenchement et au déclenchement, un certain nombre de rebondissements qui multiplient dans une notable mesure la période durant laquelle se trouvent établies les conditions de surintensité ou de surtension qui provoquent une usure accrue du collecteur et des balais du moteur. Dans ces conditions, l'augmentation de l'usure n'est pas de quelques 10 à 20 %, mais de quelques 100 à 200 %, voire davantage, ce qui explique les résultats défavorables enregistrés lors des essais susmentionnés.

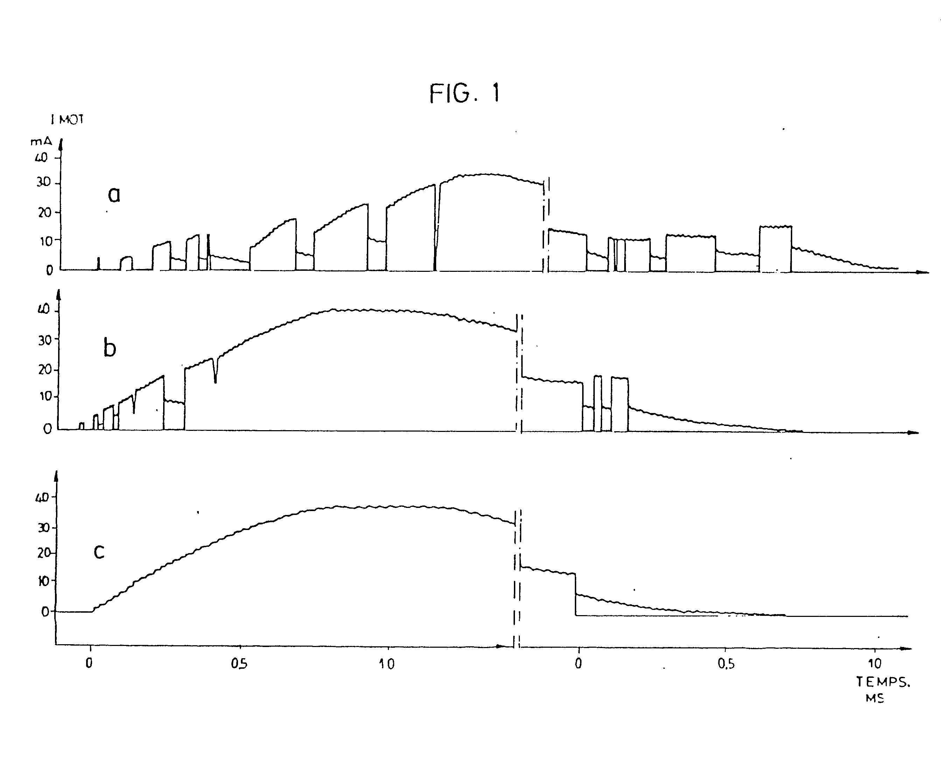

On note que les courbes de la fig. 1 du dessin annexé illustrent le phénomène de « multiplication des phénomènes entraînant une usure accrue du fait d'une commutation par des moyens électro-mécaniques ».

A côté des considérations relativement générales concernant l'art antérieur qui viennent d'être énoncées, il y a lieu de tenir compte des documents qui ont été cités dans le rapport de recherche.

En plus des deux documents, à savoir US-A-3 971 204 et US-A-3 881 144, publications antérieures qui toutes deux sont citées uniquement comme arrière-plan technologique, qui ne sauraient donc nécessiter des commentaires particuliers, on a cité principalement l'exposé CH-A-451 829 (considéré comme particulièrement pertinent) de même que l'exposé FR-A-1 332 784.

L'exposé CH-A-451 829 a pour objet un dispositif qui, comme on peut le voir notamment sur la fig. 6 de cet exposé antérieur, correspond, dans une large mesure, à ce qui se trouve défini dans le préambule de la revendication 1 annexée. On peut effectivement déduire de cette publication que l'art antérieur connaissait un dispositif comprenant (les signes de référence mentionnés ci-après se référant à la fig. 6 de cet exposé antérieur) :

— un moteur à courant continu (1) destiné à l'entraînement dudit appareil,

— un circuit électronique de commutation (10, 11) apte à établir et à rompre l'alimentation du moteur à courant continu par des organes commutateurs non électro-mécaniques,

— des moyens de commande d'enclenchement (10, 11, 12), commandant le circuit électronique de commutation de façon répétitive pour lui faire établir ladite alimentation,

— et des moyens de commande de déclenchement (10, 11, 12) fonctionnant en dépendance d'un organe mobile (8) porté ou entraîné par l'arbre de sortie du moteur et comportant ledit circuit électronique de commutation (VIA Y), pour lui faire, chaque fois, rompre ladite alimentation dès que le moteur a fait faire audit organe mobile une course prédéterminée.

Il est clair que ce dispositif est un pas dans la direction, où se situe le but de la présente invention, d'un dispositif d'entraînement intermittent répondant d'une façon satisfaisante à l'impératif d'une longue durée de vie autonome, impliquant aussi bien la satisfaction d'une exigence de très bon rendement que celle de l'exigence d'une très faible usure.

Toutefois, ce dispositif antérieurement connu n'atteint pas ce but d'une manière qui satisfait d'une façon complète l'utilisateur d'un tel dispositif, compte tenu du fait que, même si les commutations sont effectuées électroniquement, elles ne sont malgré tout pas exemptes de rebondissement, les commutateurs électroniques (11, 12) étant commandés électro-mécaniquement, sans intercalage d'un élément du type bascule supprimant les rebondissements, et surtout sans que des mesures soient prises pour diminuer le nombre des enclenchements et des déclenchements, qui augmentent l'usure, même s'ils sont exempts de rebondissements.

Il convient de voir encore ce que divulguait l'exposé FR-A-1 332 784. On note d'emblée que cet exposé antérieur concerne avant tout la stabilisation de haute précision de la vitesse de petits moteurs électriques, et qu'elle n'est pas relative principalement au problème d'une très longue durée de fonctionnement sans entretien et d'une très faible usure. Il est toutefois mentionné dans cet exposé que le moteur concerné pourrait également être un moteur à courant continu. Dans ce dispositif antérieurement connu, on propose toutefois une mesure technique qui manque totalement de résoudre le problème précédemment exposé, auquel la présente invention vise à fournir une solution, c'est-à-dire le problème d'avoir le moins possible de perte et d'usure du fait des commutations d'enclenchement ou de déclenchement. Le dispositif selon cet exposé français antérieur, propose d'établir et de rompre à tout moment adéquat l'alimentation du moteur, principalement afin de stabiliser sa vitesse. Une circuiterie électronique sert à obtenir ce résultat.

Dans ces conditions, il apparaît comme certain que l'on a un nombre d'enclenchements et de déclenchements qui est encore augmenté par rapport à celui qu'on aurait dans un dispositif conforme au préambule de la revendication annexée, ce qui signifie que les mesures techniques proposées par cet exposé antérieur français ne vont pas dans la direction du but poursuivi par la présente invention (elles vont même dans une direction qui en est l'opposé).

Le but de la présente invention, non atteint par l'art antérieur compte tenu de ce qui vient d'être exposé, est de fournir un dispositif du type générique défini par le préambule de la revendication 1 annexée, qui réponde d'une façon particulièrement satisfaisante, dans une mesure notablement supérieure à tout ce que permettait l'art antérieur considéré, à l'impératif de très longue durée de vie autonome, c'est-à-dire l'impératif à la fois d'un très bon rendement et d'une très faible usure.

Pour atteindre ce but, l'invention propose un dispositif d'entraînement du type défini dans le préambule de la revendication 1 annexée, et qui se particularise par les caractères qui sont définis dans la partie caractérisante de cette revendication 1 annexée.

Le dispositif ainsi défini, compte tenu des particularités constructives de même que de la tension d'alimentation (et le cas échéant de la résistance interne de la source d'énergie électrique) permet d'assurer au moteur à courant continu un certain couple maximum qui, eu égard encore, le cas échéant, à une certaine multiplication cinématique, assurera le couple mécanique nécessaire dans le cas le plus défavorable pour l'appareil devant être entraîné. En ce qui concerne l'économie de l'énergie d'alimentation, on aura par contre, dans tous les cas moins défavorables où un couple aussi élevé ne sera pas nécessaire, une situation où le moteur à courant continu — comme cela est une de ses caractéristiques essentielles — délivrera un couple moindre et accélérera davantage, ce qui limitera la consommation d'énergie électrique. Par ailleurs, les organes commutateurs purement électroniques seront exempts de rebondissement, puisqu'eux-mêmes commandés par une bascule, par définition exempte de rebondissement. Ainsi, l'usure du moteur se trouvera limitée dans toute la mesure du possible, ce qui fait que l'on pourra profiter, quant à la durée de vie du moteur sans entretien particulier, de la quasi-totalité du coefficient « temps de marche effectif/temps total ».

On a pu établir, au banc d'essai, qu'un dispositif de ce genre restait exempt d'usure prohibitive pendant au minimum plus de cinq ans de marche en régime intermittent, avec un temps effectif de marche approximativement égal au 1/30 du temps total.

Avantageusement, lesdits moyens de commande d'enclenchement comprennent des moyens électroniques de comptage du temps qui délivrent périodiquement des impulsions d'enclenchement audit circuit électronique de commutation, ces moyens de comptage du temps étant de préférence pilotés par une base de temps à quartz. Pour fournir une très grande souplesse d'utilisation, ces moyens de comptage du temps seront avantageusement programmables pour délivrer lesdites impulsions périodiques d'enclenchement à différentes cadences, selon le type d'appareil entraîné par le dispositif.

Typiquement, le contact du type reed dont il est question dans la revendication 1 délivrera audit circuit électronique de commutation une impulsion de déclenchement chaque fois qu'il passe de l'état ouvert à l'état fermé. Dans le cas le plus simple selon la revendication 1 où l'on n'a qu'un seul dit aimant sur ledit organe mobile, ladite course prédéterminée sera un tour complet de cet organe mobile. Si cet organe mobile est monté directement sur l'arbre de sortie du moteur, le moteur effectuera un tour complet exactement (en faisant abstraction d'éventuelles petites irrégularités non cumulatives) chaque fois que les moyens de commande d'enclenchement auront amené ledit circuit électronique de commutation à établir l'alimentation du moteur à courant continu. Si un mécanisme multiplicateur ou démultiplicateur est installé entre l'arbre de sortie du moteur et ledit organe mobile, le moteur effectuera chaque fois une fraction de tour ou plus d'un tour. Ledit couple mécanique pourra être prélevé sur l'arbre de sortie du moteur, ou sur l'arbre dudit organe mobile, ou sur un mobile intermédiaire entre eux. Le rapport de multiplication ou démultiplication entre l'arbre de sortie du moteur et l'arbre sur lequel est prélevé ledit couple mécanique assurera, selon une fonction inverse, une démultiplication ou une multiplication du couple mécanique obtenu par rapport au couple mécanique délivré par le moteur. Par ailleurs, la démultiplication ou une multiplication entre l'arbre sur lequel est prélevé ledit couple mécanique et ledit organe mobile fournira un coefficient déterminant le nombre de tours ou la fraction de tour que l'arbre fournissant le couple mécanique effectuera à chaque période d'alimentation du moteur. Avantageusement, une chaîne cinématique existera entre l'arbre de sortie du moteur et ledit organe mobile, et la construction sera telle que les rapports de multiplication ou de démultiplication seront aisément modifiables, de façon à établir à volonté la valeur du couple mécanique fournie par le dispositif de même que la course angulaire unitaire de l'arbre fournissant ce couple mécanique.

On trouve sur le marché des circuits, sous forme de circuits intégrés, qui fournissent, sous la commande d'un quartz, une fréquence de sortie prédéterminée, de préférence 1 Hz. En termes plus généraux, ces circuits du commerce fournissent une impulsion par période élémentaire de temps d'une valeur prédéterminée (par exemple 1/2 seconde, 1 seconde, 2 secondes, etc.). A partir de dispositifs de ce genre, on alimente souvent des appareils devant effectuer un pas à intervalles de temps réguliers, notamment toutes les minutes ou toutes les 36 secondes (centième d'heure). Ces appareils existants sont conçus pour effectuer un pas par exemple lorsqu'ils ont reçu 60 quantas de déplacements angulaires élémentaires. Pour la commande de ces appareils, il est toutefois indifférent que ces 60 déplacements élémentaires soient effectués en 60 étapes ou en moins de 60 étapes, voire seulement en une, deux ou trois étapes. Comme malgré tout, chaque démarrage et chaque arrêt du moteur à courant continu provoque une usure accrue et (au démarrage) un appel d'énergie électrique légèrement supérieur à celui qui intervient en marche permanente du moteur, on prévoit selon l'invention de grouper toutes ces avances angulaires élémentaires et de ne commander un enclenchement desdits moyens électroniques commutateurs que, par exemple toutes les 12 ou les 20 secondes, en établissant alors la chaîne de multiplication ou démultiplication cinématique précédemment mentionnée, de façon que l'arbre sur lequel le couple mécanique du dispositif est prélevé effectue chaque fois un déplacement total égal respectivement à 12 ou 20 fois le quanta de déplacement angulaire précité. Dans ces conditions, le moteur ne tourne que respectivement 5 ou 3 fois chaque minute, et, bien que son temps total de fonctionnement reste le même, le nombre de démarrages diminuera, ceci améliorant encore l'économie d'usure et de consommation électrique. Avantageusement, on « groupe » ainsi chaque fois 12 impulsions secondes, pour obtenir une avance de 12 quantas de déplacements angulaires toutes les 12 sec., ce qui permettra de faire avancer aussi bien un compteur de minutes (un pas toutes les cinq avances du dispositif) qu'un compteur de centième d'heure (un pas toutes les trois avances du dispositif).

D'autres particularités de l'objet de l'invention apparaîtront à la lecture de la description qui va suivre, donnée à titre d'exemple non limitatif en liaison avec les dessins annexés dans lesquels :

la fig. 1 est un diagramme montrant, par des courbes tracées en fonction du temps, les conditions d'établissement et de rupture de l'alimentation d'un moteur à courant continu, lorsque les commutations sont faites : a) par un organe électro-mécanique classique, b) par un interrupteur de type reed, et c) par des moyens de commutation non électro-mécaniques (typiquement des transistors branchés à la sortie d'un flip-flop), et

la fig. 2 est un schéma illustrant la constitution et le mode de fonctionnement d'une forme d'exécution du dispositif objet de l'invention.

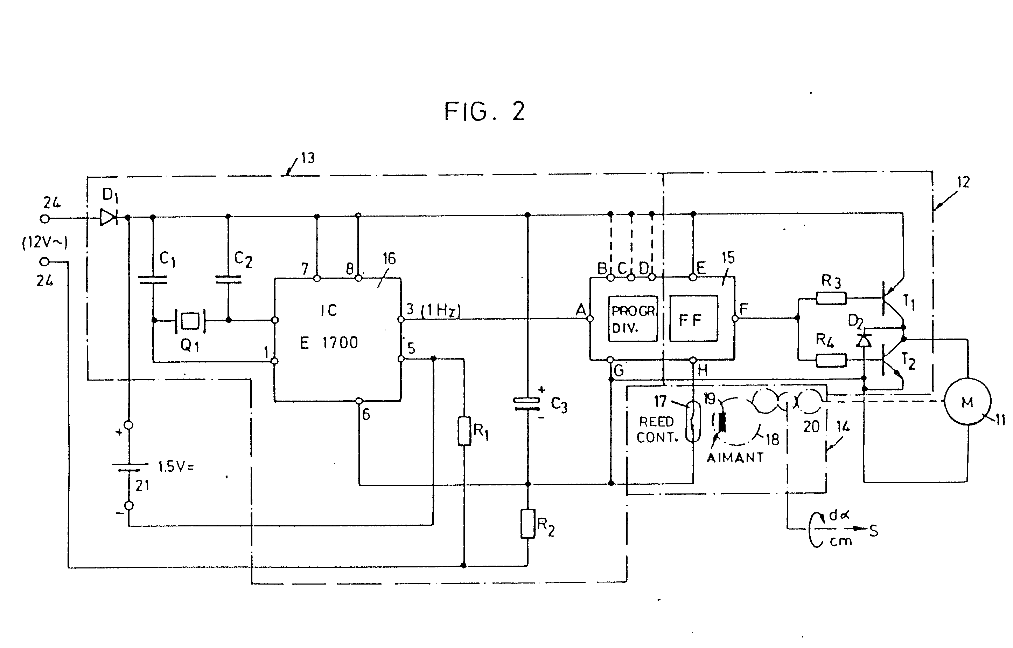

A la fig. 1, on voit, représentées d'une façon schématique, les courbes d'oscillogramme de la valeur du courant dans un moteur à courant continu auquel est appliquée une impulsion électrique. La courbe a correspond au cas où l'impulsion est appliquée au moteur à l'aide d'un contact électro-mécanique de type usuel (relais), la courbe b correspond au cas où l'impulsion électrique est appliquée au moteur à l'aide d'un contact du type reed, et la courbe c correspond au cas où l'impulsion électrique est appliquée à l'aide de moyens de commutation purement électroniques, comme par exemple ceux qui sont montrés à la fig. 2. La courbe a permet de remarquer la présence d'un grand nombre de rebondissements, aussi bien à l'enclenchement qu'au déclenchement du courant. La courbe b représente déjà une amélioration, la commande de l'impulsion à l'aide d'un relais reed comprend encore quelques rebondissements, mais qui sont de moindre importance. Enfin, on voit à la courbe c que la commande à l'aide de moyens purement électroniques permet une suppression totale de tout rebondissement.

Sur les courbes de la fig. 1, on remarque qu'à la partie droite correspondant à la fin de l'impulsion, les courants sont nettement moins élevés qu'à la partie gauche, ce qui tient au fait que, à la fin de l'impulsion, le moteur est en mouvement et fait intervenir une force contre-électro-motrice qui n'existe pas à l'instant de l'enclenchement. On remarque également qu'en de nombreux endroits, les courbes de la fig. 1 sont dédoublées, présentant une trace au niveau de courant zéro et une trace à un niveau de courant supérieur. La trace passant par le niveau zéro correspond au cas où aucune diode n'est branchée en anti-parallèle sur le moteur, de sorte que le courant ne peut pas avoir une valeur autre que zéro au moment où le contact qui le commande est ouvert. Par contre, l'autre trace correspond au cas où une diode est branchée en anti-parallèle sur le moteur (comme par exemple la diode $D_2$ dans le schéma de la fig. 2) ; dans ce cas, l'inductivité du moteur peut maintenir un certain courant au moment où le contact, branché en série avec le montage parallèle du moteur et de la diode, est ouvert.

Les diagrammes de la fig. 1, correspondent au cas d'un petit moteur à courant continu, recevant des impulsions de l'ordre de 2,5 V et laissant passer à l'enclenchement (alors qu'il ne tourne pas encore) un courant d'approximativement 40 mA, courant qui descend à une valeur nettement inférieure lorsque le moteur est en mouvement. A la fig. 1, la durée même de l'impulsion n'est pas prise en considération (elle pourrait se situer par exemple entre 5 et 20 ms), par contre l'échelle de temps est indiquée pour les phénomènes transitoires d'établissement du courant et de disparition du courant, et l'on voit que, par exemple, lors de l'enclenchement du courant à l'aide d'un contact électromécanique usuel, des rebondissements interviennent durant une période qui vient à dépasser 1 ms (avec d'autres types de contacts électromécaniques, cette période durant laquelle des rebondissements interviennent pourrait même être encore notamment plus longue).

Les essais et tests d'usure effectués en provoquant l'application au moteur, selon les trois modes sus-indiqués, d'un très grand nombre d'impulsions, montrent que le taux d'usure des parties les plus délicates du moteur à courant continu, c'est-à-dire du collecteur et des balais, est beaucoup plus élevé lorsque les commutations s'accompagnent d'un grand nombre de rebondissements (fig. 1, courbe a) que lorsque ces commutations sont franches et ne sont pas accompagnées de rebondissements (fig. 1, courbe c).

La fig. 2 représente le schéma d'un dispositif d'entraînement intermittent conforme à la conception proposée. On note qu'il s'agit en l'occurrence de fournir, sur un arbre de sortie S du dispositif, des impulsions d'entraînement mécaniques se répétant à une certaine cadence, ces impulsions mécaniques devant être fournies avec un certain couple mécanique qui doit pouvoir atteindre une certaine valeur déterminée, correspondant aux conditions d'entraînement les plus défavorables, et chaque impulsion devant fournir un certain déplacement angulaire adapté à la construction et au mode de fonctionnement de l'appareil entraîné par le dispositif.

A la fig. 2, on voit un moteur à courant continu 11, fonctionnant typiquement sous une tension de 1,5 V avec une consommation de courant de l'ordre de 20 mA dans un régime permanent où il fournit un couple moyen égal aux 40 à 60 % du couple maximum qu'il est apte à fournir. Les conditions de fonctionnement de ce moteur sont approximativement celles qui sont représentées à la courbe c de la fig. 1.

Les circuits et agencements prévus pour faire fonctionner le moteur 11 par intermittence comprennent un circuit électronique de commutation 12, un circuit électronique de commande d'enclenchement 13, et des moyens de commande de déclenchement 14, comprenant un contact reed 17. A la fig. 2, ces trois circuits ou agencements 12, 13 et 14 sont représentés encadrés par une ligne en traits mixtes. On note que les circuits électroniques 13 et 14 sont réalisés sous une forme qui les réunit, un circuit intégré 15, comprenant un flip-flop et un diviseur programmable, faisant partie pour une part du circuit électronique de commutation 12 et pour l'autre part du circuit de commande d'enclenchement 13.

Une pile ou un accumulateur 21 est raccordé sur deux entrées du circuit de commande d'enclenchement 13 ; par ailleurs, une entrée d'alimentation en courant alternatif à 12 V est prévue entre deux bornes de connexion 24, également reliées au circuit de commande d'enclenchement 13. En fait, le dispositif représenté à la fig. 2, qui constitue une forme d'exécution très particulière de la conception proposée, peut être employé selon deux modes. Selon un premier mode, pouvant être appliqué lorsqu'on dispose d'une source de courant alternatif, le dispositif fonctionne principalement en prélevant son énergie sur les entrées à courant alternatif 24, le réservoir d'énergie 21, qui est alors un accumulateur, servant uniquement à fournir une réserve de marche pour le cas où l'alimentation en courant alternatif serait en panne. Avec une consommation moyenne inférieure à 1 mA (typiquement environ 0,8 mA) un accumulateur d'une capacité d'approximativement 1,5 Ah peut assurer une réserve de marche suffisante pour plus d'un mois et demi, durée certainement supérieure à la plus longue panne de réseau que l'on peut avoir à envisager.

Le second mode d'utilisation convient au cas où le dispositif se trouve en un endroit privé de toute alimentaion en courant alternatif. Dans ce cas, les bornes d'entrée 24 ne sont pas raccordées et la source d'énergie 21 sera de préférence une pile ou un groupe de piles. On désire obtenir une durée de fonctionnement exempte d'entretien de plusieurs années, typiquement de cinq ans ou plus. Cette durée relativement longue explique le choix d'une pile plutôt que d'un accumulateur ; en effet, on ne connaît guère d'accumulateur, même d'un type à très hautes performances, qui soit apte à conserver l'énergie dont il est chargé durant une période dépassant une année.

On connaît par contre, des piles à très haute fiabilité qui n'ont qu'un courant de fuite interne tout à fait insignifiant et qui sont capables de délivrer l'énergie correspondante à la plus grande partie de leur capacité initiale sous forme d'un courant de l'ordre de 1 mA durant au moins cinq ans. On pourra par exemple choisir une pile à très haute fiabilité et de très longue durée d'une capacité de 50 Ah, ou alors un groupement en parallèle de plusieurs piles de ce genre ayant chacune une capacité plus faible, mais totalisant approximativement 50 Ah. Dans ce cas, avec un courant de décharge total (incluant la très faible décharge interne de la pile) légèrement inférieur à 1 mA, on pourra atteindre une durée de fonctionnement totalement autonome d'approximativement six ans. La consommation de courant s'établit comme suit : consommation permanente des circuits électroniques, 0,28 mA, consommation intégrée du moteur (courant moyen d'impulsions environ 20 mA, rapport d'impulsions environ 1 : 65) 0,32 mA, courant de fuite interne de la pile 0,2 mA.

La forme d'exécution présentement décrite propose la délivrance d'impulsions cadencées, c'est-à-dire se répétant avec une période fixe, mais il est bien clair que la conception proposée, dont l'essentiel réside en le moteur à courant continu 11, le circuit électronique de commutation 12, et en ses circuits et moyens de commande (mais non forcément ceux qui sont représentés à la fig. 2), conviendrait également à un dispositif donnant des impulsions d'entraînement à un rythme arbitraire ou aléatoire, dépendant par exemple d'un phénomène météorologique.

En l'occurrence, le circuit de commande d'enclenchement 13 est muni d'un circuit intégré 16, d'un type disponible dans le commerce. Ce circuit intégré est prévu pour fonctionner avec un quartz $Q_1$, à quatre MHz, et pour délivrer sur sa sortie 3 une fréquence de 1 Hz, normalement applicable à un moteur pas à pas ou à l'étage de commande d'un moteur pas à pas. Deux condensateurs $C_1$ et $C_2$, le second variable, permettent l'ajustement de la fréquence. La source d'alimentation en tension continue (pile constituant la seule alimentation dans le second mode d'utilisation) est branchée entre un point commun (connexions 7 et 8 du circuit intégré 16) et une entrée 5 du circuit intégré 16. La tension alternative, redressée par une diode $D_1$, est appliquée entre le même point commun et une extrémité d'une résistance $R_2$ dont l'autre extrémité est connectée à l'entrée 6 du circuit intégré. Un condensateur $C_3$ assure le filtrage de la tension redressée. Cette dernière est également appliquée, par l'intermédiaire d'une résistance $R_1$, sur le point d'entrée 5 du circuit intégré, de façon à assurer la recharge de l'accumulateur dans le cas du premier mode d'utilisation. Dans le second mode d'utilisation, on pourrait avantageusement débrancher le condensateur $C_3$, s'il avait un trop grand courant de fuite ; éventuellement on pourrait le remplacer par un autre condensateur de moindre capacité et sans courant de fuite.

On vient de voir la manière selon laquelle, dans une forme d'exécution particulière du dispositif, des impulsions de commande sont obtenues, sur le point de sortie 3 du circuit intégré 16, dans le circuit de commande d'enclenchement 13. Il faut noter que toute autre méthode d'obtention d'impulsions de commande, régulièrement espacées dans le temps ou arbitraire ou aléatoire, pourrait également être appliquée pour réaliser le fonctionnement du dispositif selon la conception proposée. Ces impulsions en l'occurrence à 1 Hz, sont appliquées au point d'entrée A du circuit intégré 15 qui comprend le diviseur de fréquence programmable. Selon la présence ou l'absence d'un niveau de tension élevée ou bas sur trois entrées de programmation B, C et D de ce circuit intégré 15, ce diviseur fonctionne avec différents cycles de division et fournit des impulsions à différentes fréquences. On admettra que, en réponse à une combinaison prédéterminée de niveaux hauts et bas sur les trois entrées B, C et D, le diviseur programmable ne fait que transmettre les impulsions secondes (c'est-à-dire travaille avec un rapport de division 1), de sorte que le flip-flop, contenu dans le même circuit intégré 15, mais dans la portion de celui-ci qui fait partie du circuit électronique de commutation 12, reçoit une brève impulsion chaque seconde. Ce flip-flop étant du type RS, cette impulsion le fait passer à l'état de travail, de sorte qu'un niveau bas apparaît sur une sortie F du circuit intégré 15, laquelle sortie constitue une sortie inversée du flip-flop. Un inverseur formé d'un transistor PNP $T_1$ et d'un transistor NPN $T_2$ est commandé par l'intermédiaire de deux résistances $R_3$ et $R_4$, par la sortie F du flip-flop 15. Lorsque cette dernière passe au niveau bas, le transistor $T_1$ devient passant, tandis que le transistor $T_2$ est bloqué. La tension positive, provenant de la pile, de l'accumulateur ou du redresseur (formé par la diode $D_1$, la résistance $R_2$ et le condensateur $C_3$), est alors amenée, par le transistor $T_1$ à l'état passant sur une des connexions du moteur 11, dont l'autre connexion est reliée au pôle négatif de la source d'alimentation. Ce moteur se met en marche et actionne un dispositif de multiplication ou de démultiplication cinématique 20, et, à l'autre extrémité de celui-ci, un organe mobile 18 portant un petit aimant permanent 19. Celui-ci, dans une position bien déterminée de l'organe mobile 18, vient à proximité d'un contact reed 17 qui est alors fermé et qui applique la tension négative sur une entrée H du circuit intégré 15. Lorsque, sous l'effet de la rotation du moteur, le mobile rotatif 18 se met à tourner, l'aimant 19 s'éloigne du contact reed 17 qui s'ouvre. Ceci ne provoque toutefois pas de modification de l'état du flip-flop, car le circuit intégré 15 est agencé de façon que le flip-flop soit commandé par le retour du potentiel négatif sur le point H. Lorsque le mobile rotatif 18 a effectué un tour, l'aimant 19 revient à proximité du contact reed qui se referme, et le potentiel négatif revient sur le point d'entrée H du circuit intégré 15. Ce saut de tension provoque la remise à l'état de repos du flip-flop et le passage de la connexion de sortie F du circuit intégré 15 au niveau logique élevé, c'est-à-dire au niveau de la tension positive d'alimentation. De ce fait, le transistor $T_1$ vient à l'état bloqué, tandis que le transistor $T_2$ vient à l'état passant. Le moteur 11 cesse d'être alimenté par la tension positive et, de plus, il est court-circuité par le transistor $T_2$ à l'état passant. Une diode $D_2$ est montée par ailleurs en anti-parallèle sur le moteur 11 et le tronçon émetteur-base du transistor $T_2$, de façon à empêcher le développement d'une tension de polarité inverse aux bornes du moteur, lors de la coupure du courant. Ce dernier tend en effet à se maintenir, du fait de l'inductivité du moteur, avec une polarité qui n'est pas celle pour laquelle le transistor $T_2$ est à l'état passant.

On comprend fort bien que, par le jeu du multiplicateur-démultiplicateur cinématique 20, un tour de l'organe rotatif 18 correspond à un déplacement angulaire arbitrairement choisi (inférieur, égal ou supérieur à 1 tour) de l'arbre de sortie du moteur à courant continu 11. Le couple de sortie du dispositif, destiné à entraîner un appareil, peut être prélevé, soit sur l'arbre de sortie du moteur 11, soit sur un mobile intermédiaire du multiplicateur-démultiplicateur cinématique 20, soit sur l'arbre de l'organe mobile 18. On comprend que le rapport de multiplication ou démultiplication entre l'arbre de sortie du moteur 11 et l'arbre du mobile où est prélevé le couple mécanique de sortie permet de déterminer le couple maximum de sortie qui sera présent à la sortie S du dispositif. Par ailleurs, le rapport de multiplication entre le mobile sur lequel le couple mécanique de sortie est prélevé et l'organe mobile 18 permettra de déterminer le déplacement angulaire (nombre entier ou fractionnaire de tours) qui sera effectué chaque fois par l'arbre de sortie du dispositif. On pourra ainsi choisir pour ce dernier le couple mécanique cm et le déplacement angulaire unitaire dα que l'on désirera.

On note que, puisque les transistors $T_1$ et $T_2$ sont commandés par la sortie d'un flip-flop, leurs commutations seront toujours absolument franches, exemptes de tout rebondissement. Dans ces conditions, le petit moteur à courant continu 11 pourra fonctionner sans nécessiter d'entretien durant une très longue période qui pourra s'étendre à au moins 5 ou 6 ans, voire 10 ans, le rapport du temps de fonctionnement réel du moteur au temps total écoulé étant par exemple de l'ordre de 1/60.

Un dispositif d'entraînement intermittent du genre de celui qui est représenté à la fig. 2, peut être avantageusement utilisé pour la commande d'indicateur horaire (par exemple à panneaux rabattables) ou de tambours de marquage horaire (par exemple dans un appareil à oblitérer ou à « timbrer »). Des appareils de ce type existants sont en général conçus pour recevoir des impulsions d'avancement mécanique à raison de un par seconde, et ils comprennent un agencement interne qui les amènent à provoquer un rabattement de panneaux à chaque minute, ou une avance du tambour à chaque minute, ou à la fin de chaque période de 36 secondes (marquage de centière d'heure). Dans ce cas, il est indifférent que les 60 impulsions mécaniques soient fournies régulièrement et isolément ou qu'elles soient fournies en un ou plusieurs blocs. C'est ici qu'entre avantageusement en jeu le diviseur programmable compris dans le circuit intégré 15. Par une combinaison de niveaux adéquats sur les entrées B, C et D de ce circuit intégré 15, on peut, par exemple, amener le diviseur programmable à fonctionner selon un cycle de 12. Dans ce cas, le flip-flop 15 recevra une impulsion de mise en condition de travail une fois toutes les 12 secondes. En correspondance, on établira le rapport de multiplication ou démultiplication entre le mobile qui fournit le couple mécanique de sortie S et l'organe mobile 18 de façon telle que, pour un tour de l'organe mobile 18, le mobile de sortie effectue un déplacement angulaire égal à 12 fois celui qui correspond à un pas d'entraînement de l'appareil à commander. Ainsi, ce dernier, au lieu de recevoir 60 entraînements mécaniques, en recevra seulement 5, mais 12 fois plus longs, ou alors, au lieu de recevoir 36 entraînements, il en recevra seulement 3, mais 12 fois plus longs.

On note que le même résultat pourrait être obtenu sans agir sur le multiplicateur-démultiplicateur cinématique 20, en prévoyant d'intercaler un compteur-diviseur entre le contact reed et l'entrée H du flip-flop 15.

En variante encore, on pourrait utiliser le même diviseur programmable déjà compris dans le circuit intégré 15, celui-ci comptant en avant sous l'effet des impulsions sur l'entrée A et en arrière sous l'effet des impulsions sur l'entrée H, et le flip-flop passant à l'état de travail lorsque le compteur atteint la position 12 et revenant à l'état de repos lorsque le compteur revient à la position zéro. Dans ce cas, il faudrait prévoir des moyens pour éviter toute interférence entre les deux types d'impulsions, ce qui serait automatiquement réalisé pour autant que l'organe mobile 18 effectue ses 12 tours en moins d'une seconde.

On note que des moyens cinématiques liant l'arbre de sortie du moteur 11 à l'aimant 19 peuvent être établis de différentes façons. Les moyens démultiplicateurs ou multiplicateurs de mouvement peuvent être de différents types (engrenages, chaînes, etc.) pour réaliser soit une réduction, soit une amplification du mouvement, ceci étant question de choix et d'adaptation aux conditions de l'appareil à entraîner. Il serait également possible de disposer plusieurs aimants 19 selon un espacement angulaire régulier, sur l'organe mobile 18.

L'avantage du groupement des impulsions en une seule impulsion mécanique plus longue, consiste en une usure encore plus réduite du moteur à courant continu, de même qu'en une économie d'énergie encore plus poussée, puisque le nombre des démarrages et des stoppages se trouve réduit dans la proportion du facteur de groupement des impulsions.

En choisissant un groupement de 12 impulsions-seconde, on aura un dispositif apte à commander aussi bien un compteur de minutes qu'un compteur de centième d'heure, par des impulsions mécaniques intervenant toutes les 12 secondes.

On note que le dispositif en question pourrait fort bien être utilisé pour entraîner des indicateurs à panneaux rabattables autres que des horloges, par exemple des indicateurs de destination de trains que l'on trouve dans les gares. Dans ce cas, le circuit de commande d'enclenchement 13 serait un circuit comprenant une calculatrice pour élaborer automatiquement un nombre adéquat d'impulsions, compte tenu de la position du panneau à faire apparaître. Ces impulsions pourraient être appliquées à toute vitesse adéquate, régulière ou irrégulière, indépendamment de toute question relative à la mesure ou à l'indication du temps.

On note également que, en fonctionnement cadencé, la période élémentaire de temps peut fort bien être différente d'une seconde et même se trouver dans un rapport irrationnel avec une période d'une seconde. Dans l'exemple précédemment décrit, la période élémentaire de temps était d'une seconde et le rapport, appelé M, de « l'intervalle de temps pour le fonctionnement de l'appareil entraîné » à « la période élémentaire » était de 60 ou de 36. Le facteur de groupement (appelé nombre N) était de 12. Dans le cas d'un compteur ou indicateur de minute, tous les facteurs de 60, à savoir 2, 3, 4, 5, 6, 10, 12, 15, 20, 30 peuvent convenir comme facteurs de groupe N. Toutefois, un facteur de groupement de l'ordre de 10 à 15 s'avère adéquat quant aux économies d'usure et de consommation d'énergie.

## Revendications

1. Dispositif d'entraînement pour appareil nécessitant, durant une longue période exempte d'entretien, un entraînement intermittent sûr avec le couple mécanique nécessaire dans le cas le plus défavorable pour l'appareil devant totaliser, chaque fois dans le courant d'un intervalle de temps valant M périodes élémentaires prédéterminées, un même nombre M de quanta de déplacement angulaire déterminés, M étant entier et supérieur à 1, comprenant un moteur à courant continu (11) destiné à l'entraînement dudit appareil, un circuit électronique de commutation (12) apte à établir et à rompre l'alimentation électrique du moteur à courant continu (11) par des organes commutateurs purement électroniques ($T_1$, $T_2$), des moyens de commande d'enclenchement (13), comprenant un donneur d'impulsions électronique (16) délivrant une impulsion par dite période élémentaire de temps, et commandant le circuit électronique de commutation (12) de façon répétitive, pour lui faire établir ladite alimentation, et des moyens de commande de déclenchement (14), comprenant un organe mobile (19) porté ou entraîné par l'arbre de sortie dudit moteur (11), et un organe (17) sensible à la position de cet organe mobile (19), de façon à commander ledit circuit électronique de commutation (12) pour lui faire, chaque fois, rompre ladite alimentation dès que le moteur (11) a fait faire audit organe mobile (19) une course prédéterminée, caractérisé en ce que lesdits moyens de commande de déclenchement (14) comprennent un contact du type reed (17) et au moins un aimant disposé sur ledit organe mobile (19) de façon à agir sur le contact de type reed (17) à la fin de ladite course prédéterminée, ce contact reed délivrant audit circuit électronique de commutation (12) une impulsion de déclenchement chaque fois qu'il effectue une commutation dans un sens, cet organe mobile (19) étant entraîné cinématiquement par l'arbre de sortie du moteur (11) par des moyens multipicateurs, directs, ou démultiplicateurs, ledit couple mécanique étant prélevé sur un arbre solidaire dudit organe mobile ou sur un arbre à mouvement démultiplié par rapport à celui-ci, lesdits moyens de commande d'enclenchement (13) comprenant, à la suite dudit donneur d'impulsions (16), un diviseur de fréquence (15 DIV) qui divise selon un rapport de N, N étant supérieur à 1 et facteur entier de M, et qui délivre audit circuit électronique de commutation (12) une impulsion d'enclenchement intervenant toutes les N périodes élémentaires de temps, et groupant ainsi N impulsions électriques du donneur (16) pour impartir alors à l'arbre sur lequel le couple mécanique est prélevé un déplacement angulaire unitaire que la relation cinématique dudit organe mobile (19) à l'arbre de sortie du moteur (11) rend égal à N dits quanta de déplacement angulaire.

2. Dispositif selon la revendication 2, caractérisé en ce que lesdits moyens (13) de commande d'enclenchement comprennent des moyens électroniques de mesure exacte du temps qui sont pilotés par une base de temps à quartz ($Q_1$).

3. Dispositif selon la revendication 2, caractérisé en ce que lesdits moyens de commande d'enclenchement (13) comprennent, à la suite dudit donneur d'impulsions électroniques (16), un diviseur programmable qui divise la fréquence desdites impulsions électroniques, pour commander le circuit électronique de commutation (12), de façon répétitive, à différentes cadences sélectionnables.

4. Dispositif selon l'une quelconque des revendications 1 à 3, caractérisé en ce que lesdits moyens multiplicateurs ou démultiplicateurs sont agencés pour permettre l'établissement à volonté de différents rapports de transmission de mouvement entre l'arbre de sortie du moteur et l'arbre sur lequel est prélevé ledit couple mécanique, de façon à donner à ce dernier différentes valeurs sans qu'une modification des moyens et circuits électroniques soit nécessaire.

5. Dispositif selon la revendication 4, caractérisé en ce que le rapport de multiplication ou de démultiplication cinématique desdits moyens multiplicateurs ou démultiplicateurs est ajustable à différentes valeurs de façon à permettre de donner, à volonté, différentes valeurs au déplacement angulaire unitaire que l'arbre sur lequel le couple mécanique est prélevé subit lors de chacune des périodes durant lesquelles intervient l'alimentation électrique du moteur.

6. Dispositif selon la revendication 1, dans lequel ledit donneur d'impulsions électronique (16) délivre une impulsion par seconde, caractérisé en ce que ledit diviseur de fréquence, coopérant avec lesdits moyens multiplicateurs, directs, ou démultiplicateurs, actionnent ledit organe mobile (19) de façon à donner audit nombre N une des valeurs « 2 », « 3 », « 4 », « 5 », « 10 », « 12 », « 15 », « 20 », « 30 ».

7. Dispositif selon la revendication 6, pour un appareil destiné à travailler selon un intervalle de temps d'une minute ou de 1/100 d'heure, c'est-à-dire un appareil dans lequel M vaut 60 ou 36, respectivement, caractérisé en ce que ledit diviseur de fréquence (15 DIV), ledit organe (19), et lesdits moyens multiplicateurs ou démulplicateurs sont agencés pour établir N à la valeur « 12 ».

## Claims

1. Driving device for apparatus neding, during a long period free of maintenance, a reliable intermittent drive with the mechanical torque necessary in the most unfavourable case for the apparatus having to be driven, the advance of the apparatus having to total, each time in the course of an interval of time equivalent to M predetermined elementary periods, the same number M of specific quanta of angular displacement, M being whole and greater than 1, comprising a DC motor (11) intented for driving said apparatus, an electronic switching circuit (12) capable of establishing and of cutting off the electric power supply of the DC motor (11) by purely electronic switch components ($T_1$, $T_2$), switching-on control means (13) comprising an electronic pulse-generator (16) supplying one pulse per said elementary period of time and controlling the electronic switching circuit (12) repetitively for causing it to establish the said power supply, and switching-off control means (14) comprising a movable component (19) borne or driven by the output shaft of the said motor (11), and a component (17) sensitive to the position of this movable component (19) so as to control the said electronic switching circuit (12) for causing it, each time, to cut off the said power supply as soon as the motor (11) has caused the said movable component (19) to make a predetermined run, characterized in that the said switching-off control means (14) comprise a reed-type contact (17) and at least one magnet disposed on the said movable component (19) so as to act upon the reed-type contact (17) at the end of the said predetermined run, this reed contact supplying to the said electronic switching circuit (12) a switching-off pulse each time it effects a commutation in one direction, this movable component (19) being driven kinematically by the output shaft of the motor (11) by multiplying, direct, or reduction means, the said mechanical torque being taken off a shaft integral with the said movable component or off a shaft having reduced movement relative to the latter, the said switching-on control means (13) comprising, following the said pulse generator (16), a frequency divider (15 DIV) which divides according to a ratio of N, N being greater than 1 and an integer factor of M, and which supplies to the said electronic switching circuit (12) a switching-on pulse occurring every N elementary periods of time, and thus grouping N electrical pulses of the generator (16) for then imparting to the shaft off wich the mechanical torque is taken a unitary angular displacement which the kinematic relation of the said movable component (19) to the output shaft of the motor (11) renders equal to N said quanta of angular displacement.

2. Device according to claim 2, characterized in that the said switching-on control means (13) comprise electronic means for the exact measurement of time which are controlled by a quartz time standard ($Q_1$).

3. Device according to claim 2, characterized in that the said switching-on control means (13) comprise, following the said electronic pulse-generator (16), a programmable divider which divides the frequency of the said electronic pulses for controlling the electronic switching circuit (12) repetitively at different, selectable rhythms.

4. Device according to any one of the claims 1 to 3, characterized in that the said multiplying or reduction means are arranged for permitting the establishment at will of different ratios of transmission of movement between the output shaft of the motor and the shaft off which said mechanical torque is taken, so as to give the latter different values without any modification of the electronic means and circuits being necessary.

5. Device according to claim 4, characterized in that the ratio of kinematic multiplication or reduction of said multiplying or reduction means is adjustable to different values so as to make it possible to give different values, at will, to the unitary angular displacement undergone by the sahft off which the mechanical torque is taken at the time of each of the periods during which the supplying of electric power to the motor takes place.

6. Device according to claim 1, in which said electronic pulse-generator (16) supplies one pulse per second, characterized in that the said frequency divider, cooperating with the said multiplying, direct, or reduction means, actuates the said movable component (19) so as to give the said number N one of the values « 2 », « 3 », « 4 », « 5 », « 10 », « 12 », « 15 », « 20 », « 30 ».

7. Device according to claim 6, for an apparatus intented to work according to a time interval of one minute or of 1/100 of an hour, i. e., an apparatus in whin M is equivalent to 60 or 36, respectively, characterized in that the said frequency divider (15 DIV), the said movable component (19), and the said multiplying or reduction means are arranged for establishing N at the value « 12 ».

**Patentansprüche**

1. Antriebsvorrichtung für ein Gerät, welches einen während einer langen Periode wartungsfreien Schrittantrieb benötigt, der im ungünstigsten Fall ein ausreichendes Drehmoment zum Antreiben des Gerätes liefert, dessen Vorwärtsschaltung jedesmal im Verlauf eines Zeitintervalles aufsummiert werden soll, welches M vorbestimme Zeitelemente enthält und was der gleichen Anzahl M vorbestimmter Drehwinkelschritte entspricht, wobei M eine ganze Zahl und grösser als 1 ist, mit einem Geichstrommotor (11) zum Antreiben des genannten Gerätes, einen elektronischen Schaltstromkreis (12) zum Liefern und Unterbrechen des elektrischen Stromes für den Gleichstrommotor (11) mittels rein elektronischen Schaltelementen ($T_1$, $T_2$), ein Einschaltsteuermittel (13), das einen elektronischen Impulsgeber (16) zum Liefern eines Impulses während dem genannten Zeitelement und zum wiederholten Steuern des elektronischen Schaltstromkreises (12) umfasst, damit dieser den genannten Strom liefert, und ein Ausschaltsteuermittel (14), das ein durch die Ausgangswelle des genannten Motors (11) getragenes oder angetriebenes bewegliches Organ (19) und ein auf die Stellung dieses beweglichen Organes (19) ansprechendes Organ (17) umfasst, zum Steuern des genannten elektronischen Schaltstromkreises (12), damit dieser jedesmal den genannten Strom abschaltet, wenn der Motor (11) das gennante bewegliche Organ (19) um einen vorbestimmten Winkel gedreht hat, dadurch gekennzeichnet, dass das genannte Ausschaltmittel (14) einen Reed-Kontakt (17) und wenigstens einen auf dem genannte beweglichen Organ (19) angeordneten Dauermagneten umfasst, der am Ende der Drehung um den vorbestimmten Winkel auf den Reed-Kontakt einwirkt, dieser Reed-Kontakt liefert jedesmal, wenn er eine Schaltung in einer Richtung ausführt, einen Ausschaltimpuls an den genannen elektronischen Schaltstromkreis (12), das bewegliche Organ (19) ist mit der Ausgangswelle des Motors (11) direkt oder über Uebersetzungsmittel oder Reduktionsmittel drehverbunden, wobei das genannte mechanische Drehmoment von einer fest mit dem genannten beweglichen Organ verbundenen Welle oder von einer Welle der Uebersetzungs- bzw. Reduktionsmittel, verändert durch das Uebersetzungsverhältnis desselben, abgenommen wird, dass die genannten Einschaltmittel (13) nebst dem genannten Impulsgeber (16) einen Frequenzteiler (15 DIV) enthält, welcher entsprechend dem Verhältnis N teilt, wobei N grösser als 1 und ein ganzes Vielfach von M ist, und einen Einschaltimpuls zu jedem der N Zeitelemente an den genannten elektronischen Schaltstromkreis (12) abgibt und damit N Impulse des Impulsgebers (16) zum Einwirken auf die Welle gruppiert, auf welche das mechanische Drehmoment übertragen wird, zum Erhalten einer spezifischen Drehbewegung, wobei die kinemtaische Beziehung des genannten beweglichen Organes (19) zur Ausgangswelle des Motors (11) gleich N der genannten Drehwinkelschritte entspricht.

2. Vorrichtung nach Anspruch 1, dadurch gekennzeichnet, dass das genannte Einschaltsteuermittel (13) elektronisch ein Mittel zum genauen Messen der Zeit umfasst, welches Mittel durch eine einen Quarz ($Q_1$) aufweisende Zeitbasis gesteuert wird.

3. Vorrichtung nach Anspruch 2, dadurch gekennzeichnet, dass das genannte Einschaltsteuermittel (13) nebst dem genannten Impulsgeber (16) einen programmierbaren Teiler zum Teilen der Frequenz der genannten elektronischen Impulse und weiderholten Steuern des elektronischen Schaltstromkreises (12) in unterschiedlicher wählbarer Folge enthält.

4. Vorrichtung nach einem der Ansprüche 1 bis 3, dadurch gekennzeichnet, dass die Uebersetzungs- oder Reduktionsmittel zum wahlweisen Einstellen des Uebersetzungsverhältnisses der Bewegungsübertragung zwischen der Ausgangswelle des Motors und der Welle, von der das genannte mechanische Drehmoment abgenommen wird, so ausgebildet sind, dass das letztere auf verschiedene Werte einstellbar ist, ohne dass es notwendig ist, die elektronischen Mittel und Stromkreise zu ändern.

5. Vorrichtung nach Anspruch 4, dadurch gekennzeichnet, dass das Uebersetzungsverhältnis der Uebersetzungs- oder Reduktionsmittel auf vershiedene Werte einstellbar ist, um zu gestatten, dass die Welle, von der das mechanische Drehmoment abgenommen wird, bei allen Zeitintervallen, während welchen der elektrische Strom dem Motor zugeführt wird, wahlweise verschieden grosse Drehwinkelschritte ausführt.

6. Vorrichtung nach Anspruch 1, in welcher der genannte elektronische Impulsgeber (16) einen Impuls pro Sekunde liefert, dadurch gekennzeichnet, dass der mit den Uebersetzungs- oder Reduktionsmiteln zusammenwirkende Frequenzteiler das bewegliche Organ (19) so beinflusst, dass das genannte Verhältnis N gleich einem der Werte « 2 », « 3 », « 4 », « 5 », « 10 », « 12 », « 15 », « 20 » oder « 30 » ist.

7. Vorrichtung nach Anspruch 6, für ein Gerät, das zum Arbeiten in Zeitintervallen von einer Minute oder 1/100 Stunde bestimmt ist, d. h. ein Gerät, bei welchem die Anzahl M gleich 60 bzw. 36 ist, dadurch gekennzeichnet, dass der genannte Freuquenzteiler (15 DIV), das genannte bewegliche Organ (19) und die Uebersetzungs- oder Reduktionsmittel so ausgebildet sind, dass das Verhältnis N gleich 12 ist.

FIG. 1

TEMPS.
MS

0 028 433

FIG. 2